# EUROPÄISCHE PATENTANMELDUNG

(11) **EP 1 975 499 A2**
(43) Veröffentlichungstag der Anmeldung: **01.10.2008**
(21) Anmeldenummer: 08005545.2
(22) Anmeldetag: 25.03.2008
(51) Int. Cl.: F16L 59/16

(54) **Vorrichtung zur Herstellung eines Abzweigs an einer verlegten Rohrleitung**

(30) Priorität: 29.03.2007 DE 202007004606 U
(71) Anmelder: Brugg Rohr AG, Holding, 5200 Brugg (CH)
(72) Erfinder: Strumpen, Wolf-Dieter, 30851 Langenhagen (DE); Szwarc, Grzegorz, 96-313 Chylice (PL)

(57) **Zusammenfassung**

Es wird eine Vorrichtung zur Herstellung eines Abzweigs an einer verlegten Rohrleitung beschrieben, bestehend aus einem Innenrohr, einem Mantelrohr aus Kunststoff und einer zwischen dem Innenrohr und dem Mantelrohr befindlichen Wärmedämmschicht aus aufgeschäumten Kunststoff, wobei ein Band aus einem thermoplastischen Kunststoff vorgesehen ist, welches den für den Abzweig vorgesehenen, von der Dämmschicht und dem Mantelrohr befreiten Bereich überdeckt, und wobei das Band auf den Enden des Mantelrohres aufliegt und mit diesen flüssigkeitsdicht verbunden ist und seine überlappenden Bandkanten ebenfalls flüssigkeitsdicht verbunden sind und wobei das Band eine Aushalsung aufweist, an welche ein Kunststoffrohr angeschweißt isf. Das Band (8) und das Kunststoffrohr (12) bilden eine vorgefertigte Einheit, und das Kunststoffrohr (12) ist mittels Spiegelschweißen an die Aushalsung (9) angeschweißt.

## Beschreibung

Die Erfindung betrifft eine Vorrichtung zur Herstellung eines Abzweigs an einer verlegten Rohrleitung nach dom Oberbegriff des Anspruchs 1.

Aus der DE 34 47 393 A1 ist ein Verfahren zur Herstellung eines Abzweigs an einer verlegten Rohrleitung, bestehend aus einem Innenrohr, einem Mantelrohr aus Kunststoff sowie einer zwischen Innenrohr und Mantelrohr befindlichen Wärmedämmschicht aus aufgeschäumtem Kunststoff, bekannt.

Derartige starren Leitungsrohre dienen vorrangig dem Transport von Fernwärme und sind in Längen von bis zu 10 m erhältlich. Unter den Fachleuten werden diese Leitungsrohre als Kunststoffmantelrohre - kurz KMR - bezeichnet. Das Innenrohr besteht in der Regel aus Stahl, die Wärmedämmschicht aus Polyurethanschaum und das Mantelrohr aus Polyethylen.

Zur Herstellung eines Abzweigs wird bei der DE 34 47 393 A1 an der für den Abzweig vorgesehenen Stelle das Mantelrohr sowie die Wärmedämmschicht über eine bestimmte Länge entfernt. Sodann wird eine Öffnung in dem Innenrohr hergestellt und in oder an die Öffnung das Innenrohr der Abzweigleitung ein- bzw. angeschweißt. Daraufhin wird der Bereich zwischen den Enden des Mantelrohres beiderseits des Abzweigrohres mit einem Band aus Kunststoff durch Umlegen des Bandes verschlossen. Das Band weist eine Öffnung sowie eine Aushalsung auf, welche das Innenrohr der Abzweigleitung umgibt. Im Bereich zwischen den Enden des Kunststoffmantelrohres sowie im Bereich seiner überlappenden Bandkanten weist das Band ein Heizband mit einem Draht aus metallischem Widerstandsmaterial auf, welches eine flüssigkeitsdichte Verbindung zwischen dem Band und den Enden des Mantelrohres,und an den überlappenden Bandkanten des Bandes herbeiführt.

Das Mantelrohr der Abzweigleitung wird anschließend mit dem Ende der Aushalsung flüssigkeitsdicht verbunden. Hierzu wird ein kurzes Kunststoffrohr verwendet, welches über die Aushalsung und das Mantelrohr gestülpt wird. Auch hier wird die flüssigkeitsdichte Verbindung zwischen dem Kunststoffrohr und der Aushalsung sowie dem Mantelrohr der Abzweigleitung durch Heizbänder mit einem Widerstandsdraht hergestellt.

Nachteilig bei dieser Vorgehensweise ist, daß ein erheblicher Arbeitsaufwand an der Baustelle entsteht, welcher die Sicherheit der Schweißnähte beinträchtigen könnte.

Weitere Lösungsvorschläge zur Herstellung von Abzweigen sind durch die DE 12 56 003, DE 34 00 045 A1 und DE 37 35 228 A1 offenbart.

Der vorliegenden Erfindung liegt die Aufgabe zugrunde, eine Vorrichtung zur Herstellung eines Abzweigs an einer bereits verlegten Rohrleitung bereitzustellen, durch welche der Arbeitsaufwand auf der Baustelle, d. h. dort, wo der Abzweig hergestellt werden soll, soweit wie möglich verringert werden kann, und die Sicherheit der Verbindung zwischen der Aushalsung und dem Mantelrohr der Abzweigleitung dauerhaft gewährleistet werden kann.

Diese Aufgabe wird durch die im Kennzeichen des Anspruchs 1 erfaßten Merkmale gelöst.

Dadurch, daß das Band und das Kunststoffrohr eine vorgefertigte Einheit bilden, kann auf eine Schweißverbindung an der Baustelle verzichtet werden. Das Spiegelschweißen kann werksseitig unter sauberen Bedingungen erfolgen. Der daraus entstehende Vorteil besteht darin, daß die Schweißnaht zwischen der Aushalsung und dem Kunststoffrohr, werksseitig auf ihre Dichtigkeit geprüft werden kann.

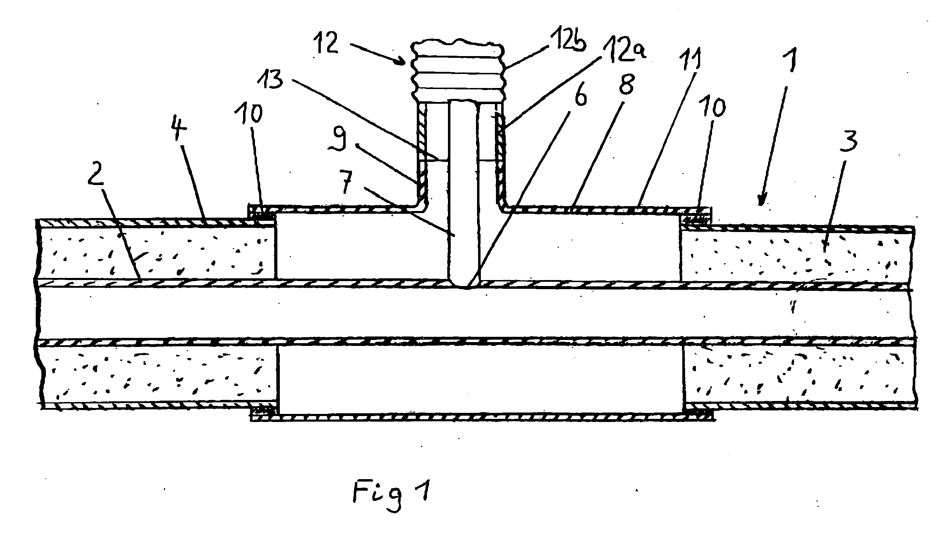

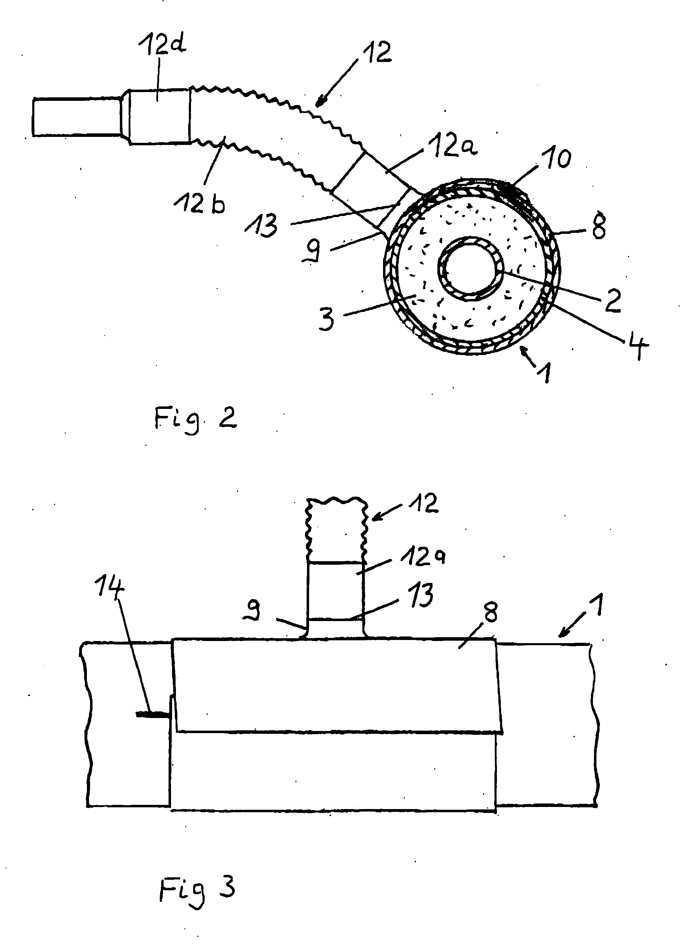

Die Erfindung ist anhand der in den Figuren 1 bis 3 schematisch dargestellten Ausführungsbeispiele näher erläutert.

In der Figur 1 ist eine verlegte Rohrleitung 1 dargestellt, die aus einem mediumführenden Innenrohr 2 aus Stahl, einer Wärmeisolationsschicht 3 aus Polyurethanschaum und einem Kunststoffaußenmantel 4 besteht. An diese Rohrleitung 1 soll eine gleichartig aufgebaute nicht dargestellte Rohrleitung mit einem Innenrohr, einer Wärmeisolationsschicht sowie einem Kunststoffmantel angeschlossen werden. Die Abzweigleitung hat geringere Abmessungen als die Rohrleitung 1. An der für den Abzweig vorgesehenen Stelle wird der Mantel 4 und die Isolationsschicht 3 über eine bestimmte Länge entfernt, so daß das Innenrohr 2 freiliegt. In das Innenrohr 2 wird dann mittels eines geeigneten Werkzeugs, beispielsweise einer Frösvorrichtung, eine kreisrunde Öffnung 6 eingebracht und diese Öffnung 6 mit einem Abzweigrohr 7 verschweißt. Der Durchmesser des Abzweigrohres 7 entspricht dem Durchmesser des Innenrohres der Abzweigleitung. Über den freigelegten Bereich des Innenrohres 2 wird ein Kunststoffband 8 mit einer Aushalsung 9 herumgelegt, wobei die Aushalsung 9 das Abzweigrohr 7 möglichst konzentrisch umgibt. Die Enden des Kunststoffbandes 8 liegen zweckmäßigerweise auf den Enden des Mantelrohres 4 auf. Dazwischen liegt das Heizband 10, welches aus einem Polyäthylenband besteht, in welchem ein Widerstandsdraht mäanderförmig eingebettet ist. Zwischen die einander überlappenden in Längsrichtung der Rohrleitung 1 verlaufenden Bandkanten wird in nicht dargestellter Weise ebenfalls ein Heizband gelegt. Die Bandkanten werden von innen her abgestützt. An den Widerstandsdraht wird dann Spannung angelegt und auf die in Umfangsrichtung und in Längsrichtung der Rohrleitung 1 verlaufenden Schweißnähte Druck ausgebracht. Durch eine Öffnung 11 im Kunststoffband 8 wird ein aufschäumbares Kunststoffgemisch auf der Basis Polyurethan eingefüllt und der Ringraum zwischen dem Kunststoffband 8 und dem Innenrohr 2 ausgeschäumt. Die Öffnung 11 wird dann verschlossen.

Ein Band, welches mit den Enden eines Kunststoffrohres flüssigkeitsdicht verschweißt werden kann, ist Gegenstand des Deutschen Gebrauchsmusters 83 04 372.

Gemäß der Lehre der Erfindung ist an die Aushalsung 9 bereits werksseitig ein Kunststoffrohr 12 angeschweißt, dessen freies Ende mit dem Ende des abzweigenden wärmegedämmten Rohres verbunden werden kann. Das Kunststoffrohr 12 besteht aus einem gewellten Bereich 12b sowie einem an beiden Enden des Kunststoffrohres 12 vorgesehenen glattwandigen Bereich 12a und 12d. Der der Abzweigstelle zugekehrte glattwandige Bereich 12a ist mittels Spiegelschweißen werksseitig mit der Aushalsung 9 verschweißt. Die Schweißnaht ist mit 13 bezeichnet. Das Ende 12d des Kunststoffrohres 12 ist wärmeschrumpfbar ausgebildet und wird auf den Mantel des Abzweiges aufgeschrumpft. Zur besseren Abdichtung dieses Bereiches kann eine nicht dargestellte Dichtschnur zwischen dem Bereich 12d und dem Mantel des Abzweigs und/oder ein nicht dargestellter Schrumpfschlauch vorgesehen sein, der auf dem Bereich 12d und dem Mantel des Abzweigs aufliegt.

In der Figur 2 ist die Abzweigstelle in einer Ansicht dargestellt, in welcher die Rohrleitung 1 quer zu ihrer Längsachse geschnitten ist. Das Heizband 10 befindet sich zwischen den überlappenden Bandkanten des Bandes 8. Der Abzweig mit dem Kunststoffrohr 12 steht in einem Winkel von etwa 45°.

Die Figur 3 zeigt eine Ansicht der Abzweigstelle mit Blick auf die überlappenden Bandkanten des Bandes 8. An der zuunterst liegenden Bankante des Bandes 8 ist eine Markierung 14 vorgesehen, welche sicherstellen soll, daß die Bandkanten mittig übereinander liegen sollen.

## Patentansprüche

1. Vorrichtung zur Herstellung eines Abzweigs an einer verlegten Rohrleitung, bestehend aus einem Innenrohr, einem Mantelrohr aus Kunststoff und einer zwischen dem Innenrohr und dem Mantelrohr befindlichen Wärmedämmschicht aus aufgeschäumten Kunststoff, wobei ein Band aus einem thermoplastischen Kunststoff vorgesehen ist, welches den für den Abzweig vorgesehenen, von der Dämmschicht und dem Mantelrohr befreiten Bereich überdeckt, und wobei das Band auf den Enden des Mantelrohres aufliegt und mit diesen flüssigkeitsdicht verbunden ist und seine überlappenden Bandkanten ebenfalls flüssigkeitsdicht verbunden sind und wobei das Band eine Aushalsung aufweist, an welche ein Kunststoffrohr angeschweißt ist, **dadurch gekennzeichnet, daß** das Band (8) und das Kunststoffrohr (12) eine vorgefertigte Einheit bilden und das Kunststoffrohr (12) mittels Spiegelschweißen an die Aushalsung (9) angeschweißt ist.

2. Vorrichtung nach Anspruch 1, **dadurch gekennzeichnet, daß** auf der unten gelegenen Bandkante eine von außen sichtbare Markierung (14) vorgesehen ist.

3. Vorrichtung nach Anspruch 1 oder 2, **dadurch gekennzeichnet, daß** zwischen dem Band (8) und dem Mantelrohr (4) an beiden Enden des Bandes (8) ein Heizband mit einem Widerstandsdraht vorgesehen ist.

4. Vorrichtung nach einem der Ansprüche 1 bis 3, **dadurch gekennzeichnet, daß** zwischen den überlappenden Bandkanten des Bandes (8) ein Heizband (10) mit einem Widerstandsdraht vorgesehen ist.

5. Vorrichtung nach Anspruch 3 oder 4, daß die Enden des Heizbandes (10) zwischen den überlappenden Bandkanten mit den Enden des Heizbandes zwischen Mantelrohr (4) und dem Band (8) elektrisch miteinander verbunden sind.

6. Vorrichtung nach einem der Ansprüche 1 bis 5, **dadurch gekennzeichnet, daß** das dem Abzweig zugekehrte Ende (12d) des Kunststoffrohres (12) auf das Mantelrohr des Abzweiges aufgeschrumpft ist.

7. Vorrichtung nach einem der Ansprüche 1 bis 6, **dadurch gekennzeichnet, daß** der Bereich zwischen dem Ende (12d) des Kunststoffrohres (12) und dem Mantel des Abzweiges von einem Schrumpfschlauch überdeckt ist, dessen innere Oberfläche mit einem Heißschmelzkleber beschichtet ist.
